# EUROPÄISCHE PATENTSCHRIFT

(11) **EP 3 145 353 B1**
(45) Veröffentlichungstag und Bekanntmachung des Hinweises auf die Patenterteilung: **17.10.2018**
(21) Anmeldenummer: 15831126.6
(22) Anmeldetag: 23.11.2015
(51) Int. Cl.: A42B 3/04, F16M 11/04, F16M 11/10, F16M 13/02, F16M 13/04

(54) **HALTERUNG FÜR EINE KAMERA UND ANORDNUNG VON KAMERA, HALTERUNG UND HELM**
HOLDING ELEMENT FOR A CAMERA AND CAMERA ARRANGEMENT, HOLDING ELEMENT AND A HELMET
ÉLÉMENT DE RETENUE POUR UNE CAMÉRA ET ENSEMBLE CAMÉRA, ÉLÉMENT DE RETENUE ET CASQUE

(30) Priorität: 21.11.2014 DE 102014017253; 18.05.2015 CN 201510253384; 18.05.2015 CN 201510253528; 01.07.2015 DE 102015008333
(43) Veröffentlichungstag der Anmeldung: 29.03.2017
(73) Patentinhaber: Tormaxx GmbH, 41199 Mönchengladbach (DE)
(72) Erfinder: KOCH, Hubert, 41199 Mönchengladbach (DE)
(74) Vertreter: Castell, Klaus
(86) Internationale Anmeldenummer: PCT/DE2015/000551
(87) Internationale Veröffentlichungsnummer: WO 2016/078636

(56) Entgegenhaltungen:
- CN-U- 202 228 891
- GB-A- 2 424 821
- US-A- 4 270 679
- US-A1- 2002 120 979
- US-A1- 2013 184 033
- US-A1- 2014 103 181
- US-A1- 2014 105 589
- US-B1- 7 219 370

## Beschreibung

Die Erfindung betrifft eine Halterung für eine Kamera. Insbesondere betrifft die Erfindung eine Halterung zur Befestigung einer Kamera an einem Helm.

Kameras sind hochempfindliche, in der Regel relativ teure Einrichtungen die zur stabilen Lagerung an Stativen befestigt werden. Derartige Kameras werden jedoch auch als Film- und Fotokameras in hochdynamischen Einsätzen verwendet, wie es insbesondere beim Sport der Fall ist. Hierzu wird die Kamera beispielsweise am Helm eines Skiläufers, Fahrradfahrers oder Kajakfahrers befestigt, um während eines dynamischen Einsatzes sicher mit dem Helm verbunden, Aufnahmen zu machen.

Die Befestigungseinrichtungen sind dazu ausgelegt, die Kamera derart stabil am Helm zu befestigen, dass sie auch bei dynamischen Belastungen sicher mit dem Helm verankert ist. Hierzu wurden die Befestigungseinrichtungen immer weiterentwickelt, so dass gute Kamerahalterungen auch bei starken dynamischen Belastungen eine sichere Befestigung der Kamera am Helm gewährleisten.

Der Erfindung liegt die Aufgabe zu Grunde, eine derartige Halterung weiterzuentwickeln. Diese Aufgabe wird mit einem Helm mit Halterung gelöst, mit den Merkmalen des Patentanspruchs 1, wobei bei Überschreiten einer definierten Belastung auf die Kamera die Kamera an einer definierten Stelle von der Halterung löst.

Sofern im dynamischen Einsatz eine statische oder eine dynamische Belastung als Kraft auf die Kamera wirkt, wird diese dynamische Belastung durch die feste Verbindung mit dem Helm auf den Helm übertragen. Der Helm überträgt diese Belastung wiederum auf den Kopf eines Menschen, an dem der Helm befestigt ist. Dadurch wirken Kräfte vom Helm auf den Kopf oder den Halsbereich, die zu ernsthaften Verletzungen führen können.

Diese Kette der weitergeleiteten Kräfte wird erfindungsgemäß in der Nähe der Krafteinleitung an der Kamerahalterung unterbrochen, um Beschädigungen des Helms und insbesondere Verletzungen der den Helm tragenden Person zu vermeiden.

Dies hat zur Folge, dass die Halterung die Kamera ab einer definierten Belastung nicht mehr trägt. Dadurch löst sich die Kamera im hochdynamischen Einsatz von dem Helm, was in der Regel zur Zerstörung der Kamera führt.

Obwohl es die zentrale Aufgabe ist, die Kamera insbesondere bei besonders dynamischen Einsatzsituationen sicher am Helm zu halten, wird erfindungsgemäß vorgeschlagen, gerade in einer besonders dynamischen Situation die Verbindung zwischen Kamera und Helm zu lösen und die Zerstörung der Kamera in Kauf zu nehmen. Hierfür bietet die Halterung eine definierte Stelle, so dass weder der Helm noch die Kamera beschädigt werden, wenn sich die Kamera von der Halterung löst.

Beispiele davon sind CN202228891, US20020120979,

GB2424821, US7219370 und US20140105589.

Die definierte Belastung wird durch die Bruchfestigkeit definiert, die die mechanische Spannung angibt, die unter gleichmäßiger Steigerung der Belastung an der Halterung zum Bruch führt. Je nach Art der Beanspruchung kann als Bruchfestigkeit die Zugfestigkeit, Druckfestigkeit, Biegezugfestigkeit, Scherfestigkeit oder Torsionsfestigkeit als definierte Belastung angegeben werden. Bei einer dynamischen Belastung kann die Dauerfestigkeit oder die Inertfestigkeit angegeben werden.

Vorteilhaft ist es, dass die Löseeinrichtung die Kamera zusammen mit einem Teil der Löseeinrichtung löst. Die Löseeinrichtung ist mehrstückig und erlaubt zwischen diesen Teilen der Löseeinrichtung eine Verbindung, die sich bei Überschreiten der definierten Belastung löst. Eine vorteilhafte Ausführungsvariante sieht vor, dass die Halterung eine reversible Befestigung der Kamera am Helm ermöglicht. Die Löseeinrichtung kann reversibel oder irreversibel die Halterung verändern, um die Kamera vom Helm zu trennen.

Diese einfache Ausführungsvariante sieht vor, dass die Löseeinrichtung einen Haltebügel aufweist, der sich bei Überschreiten einer definierten Belastung auf die Kamera derart verbiegt, dass sich die Kamera von der Halterung löst. Dieses Verbiegen kann reversibel oder irrreversibel ausgestaltet sein.

Eine derartige Halterung kann auch eine Löseeinrichtung aufweisen, die eine Sollbruchstelle aufweist, die bei Überschreiten einer definierten Belastung auf die Kamera durch ihren Bruch die Kamera von der Halterung löst. Eine derartige Sollbruchstelle kann an jedem Teil der Halterung vorgesehen sein.

Die Halterung kann auch einen Magneten und ein Metallteil oder zwei Magneten aufweisen, um die Kamera an der Halterung oder die Halterung an einem Helm zu halten oder um zwei Teile der Halterung zusammenzuhalten. Diese Magnetverbindung kann sowohl zur Fixierung als auch als Löseeinrichtung verwendet werden. Eine einfache Ausbildung der Halterung sieht vor, dass die Magnetverbindung derart stark ist, dass sie beim normalen Gebrauch dazu geeignet ist, die Kamera sicher zu halten, und dass sie bei einem Sturz die Kamera freigibt, sodass sich die Verbindung zwischen Kamera und Helm löst, um Verletzungen zu vermeiden. Daher wird nach einem weiteren Aspekt der Erfindung, der auch ohne die zuvor genannten Merkmale erfindungswesentlich ist, vorgeschlagen, dass die Löseeinrichtung eine Magnetverbindung aufweist, die bei Überschreiten einer definierten Belastung auf die Kamera die Kamera von der Halterung löst.

Die vorteilhafte Ausgestaltung der Halterung sieht vor, dass ein Halteteil der Halteeinrichtung zur Befestigung einer Kamera an der Halterung ausgebildet ist und ein Fixierteil der Halterung zur Befestigung der Halteeinrichtung an einem Helm ausgebildet ist.

Bei einer derartigen Ausbildung ist es vorteilhaft, wenn das Halteteil einen Arm mit mindestens einem Schlitz aufweist. Dieser Schlitz ermöglicht es, auf einfache Art und Weise die Kamera an der Halterung sicher zu befestigen.

Das Fixierteil ist als Sockel ausgebildet. Dabei kann das Fixierteil beispielsweise eine Klebefläche aufweisen.

Eine einfach lösbare Verbindung wird dadurch erzielt, dass das Halteteil in das Fixierteil einschiebbar ist. Vorteilhaft ist es, wenn das Halteteil in das Fixierteil einrastet.

Eine besonders sichere Verbindung wird dadurch erzielt, dass das Halteteil oder das Fixierteil mit einem Schwenkbügel fixierbar ist.

Es hat sich gezeigt, dass eine definierte Belastung, die einerseits eine sichere Befestigung ermöglicht und andererseits negative Einflüsse vom Helm auf die den Helm tragende Person vermeidet, bei einer Bruchlast zwischen 10 und 1000 N, vorzugsweise zwischen 100 und 1000 N liegt.

Die Helmhalterung kann in unterschiedlichen Varianten ausgebildet sein. Vorteilhafte ausführungsformen sind Gegenstand der Unteransprüche und der Zeichnung.

Vorteilhaft ist eine Grundplatte aus reißfestem und dennoch elastischem Kunststoff, die an den vier Ecken Aussparungen für Verbindungselemente enthält. Diese an die Grundplatte montierbaren Elemente unterscheiden sich je nach Helmart und sind individuell auf jede Helmart abgestimmt.

Vier Saugknöpfe, die durch Vulkanisierung fest mit der Grundplatten-Unterseite verbunden sein können sorgen neben der durch die vier Befestigungen angelegten Spannung für festen Halt der Systeme.

Das Halterungssystem ist individuell für unterschiedliche Einsätze modifizierbar: Motorrad, Quad und ähnlichen Helme, Skater, Dirt Bike und Fahrrad- und ähnliche Helme mit vielen Ausschnitten.

Der Weiterentwicklung der Erfindung liegt die Aufgabe zugrunde, ein einfaches stabiles Halterungssystem vorzuschlagen, mit dem insbesondere Helmkameras auf unterschiedlichen Helmen befestigt werden können.

Diese Aufgabe wird mit einem Halterungssystem mit einer Grundplatte aus elastischem Kunststoff gelöst, das vier Verbindungselemente aufweist, die sich von der Grundplatte in unterschiedliche Richtungen erstrecken. Die beiliegenden Figuren sind beispielhafte Ausgestaltungen von Helmhalterungen.

Die Ausbildung der Grundplatte aus elastischem Kunststoff ermöglicht es, elastische Verbindungselemente oder auch unelastische Verbindungselemente einzusetzen, um die Grundplatte an einem Helm zu befestigen.

Besonders vorteilhaft sind Saugnäpfe, insbesondere vier Saugnäpfe an der Unterseite der Grundplatte, die eine Verbindung zwischen der Grundplatte und dem Helm bewirken und somit ein Verrutschen der Grundplatte relativ zum Helm vermeiden.

Vorteilhaft ist es, wenn die Halterung eine Grundplatte aus elastischem Kunststoff mit drei, vorzugsweise vier Verbindungselementen aufweist, die sich von der Grundplatte in unterschiedliche Richtungen erstrecken.

Die Verbindungselemente können lösbar an der Grundplatte befestigt sein.Die Grundplatte ist vorzugsweise rechteckig oder quadratisch und die Verbindungselemente sind dann an den Ecken angeordnet.Die Verbindungselemente können Befestigungseinrichtungen aufweisen, die eine Befestigung unter Spannung an einem Helm ermöglichen. Dabei ist es vorteilhaft, wenn die Verbindungselemente längenverstellbar sind.

Besonders vorteilhaft ist es, wenn an einer Anlageseite der Grundplatte Saugnäpfe angeordnet sind.Diese Saugnäpfe können als Rechteck oder Quadrat angeordnet sein und sie können auf der Grundplatte verschiebbar befestigt sein.

Vorteilhaft ist es, wenn an einer Halteseite der Grundplatte eine Rasteinrichtung zur Befestigung von beispielsweise einer Helmkamera vorgesehen ist.

Die Ausbildung der Verbindungselemente und die Saugnäpfe an der Halterung sind auch ohne die übrigen Merkmale der Grundplatte und der Halterung insbesondere ohne die Sollbruchstelle erfindungswesentlich.

Die der Erfindung zugrunde liegende Aufgabe wird auch mit einer Anordnung von Kamerahalterung und Helm gelöst, bei der sich beim Überschreiten einer definierten Belastung auf die Kamera die Kamera vom Helm löst. Vorteilhaft ist es hierbei, dass sich bei Überschreiten einer definierten Belastung auf die Kamera die Kamera von der Halterung löst. Außerdem ist es vorteilhaft, dass sich beim Überschreiten einer definierten Belastung auf die Kamera, die Kamera nur von einem Teil der Halterung löst.

Vorteilhafte Ausführungsvarianten derartiger Halterungen sind in der Zeichnung dargestellt und werden im Folgenden näher erläutert.

Es zeigt:

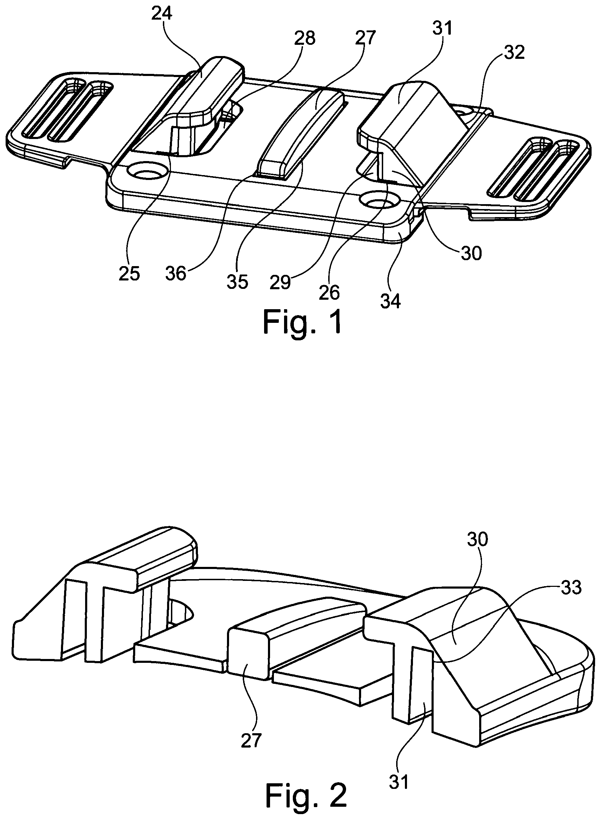

- Figur 1: eine dreidimensionale Draufsicht auf ein Fixierteil einer Halterung,
- Figur 2: einen Schnitt durch das in Figur 1 gezeigte Fixierteil,
- Figur 3: eine Unteransicht des in Figur 1 gezeigten Fixierteils,
- Figur 4: eine dreidimensionale Ansicht einer Halterung aus Fixierteil und Halteteil,
- Figur 5: eine Draufsicht auf das in Figur 4 gezeigte Fixierteil,
- Figur 6: die in Figur 4 gezeigte Halterung mit einem Sicherungseinsatz,
- Figur 7: eine dreidimensionale Ansicht eines Halteteils mit Kamerahalter,
- Figur 8: die Unterseite des in Figur 7 gezeigten Halteteils mit geschlossenem Schwenkbügel,
- Figur 9: die Unterseite des in Figur 7 gezeigten Halteteils mit offenem Schwenkbügel,
- Figur 10: eine Draufsicht von vorne auf einen Helm mit einer Grundplatte mit Verbindungelementen,
- Figur 11: eine Draufsicht von hinten auf den in Figur 10 gezeigten Helm mit Grundplatte
- Figur 12: eine Halterung mit vier Verbindungselementen,
- Figur 13: eine Draufsicht von hinten auf einen Helm mit einer Halterung nach Figur 12,
- Figur 14: eine Draufsicht von vorne auf einen Helm mit einer Halterung nach Figur 12,
- Figur 15: eine Unteransicht einer Grundplatte und
- Figur 16: eine Draufsicht auf einen Helm mit einer Grundplatte mit zwei sich von der Grundpatte erstreckenden Verbindungselementen und zwei angehakten Verbindungselementen.

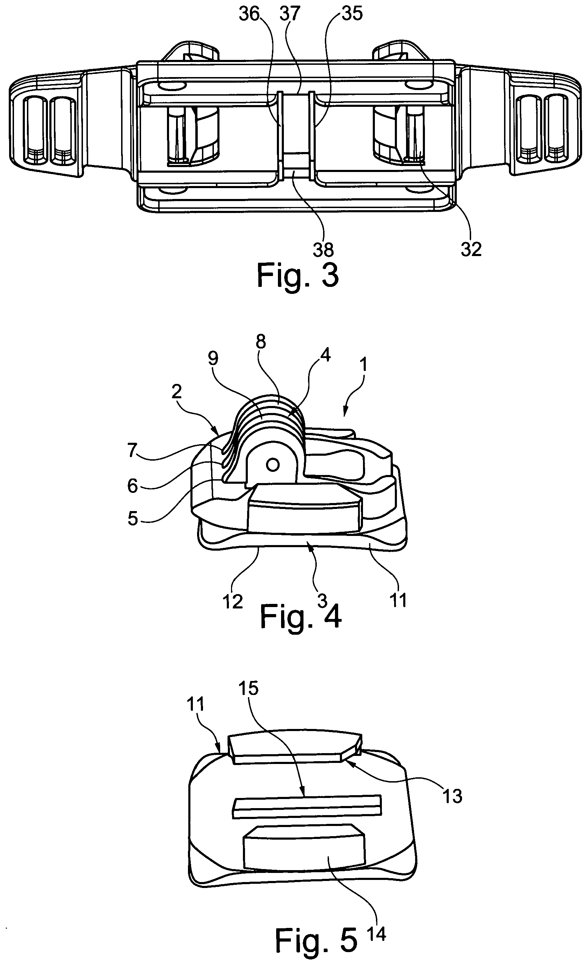

Die gezeigte Halterung 1 bestehen aus einem Halteteil 2 zum Befestigen einer Kamera (nicht gezeigt) an der Halterung 1 und einem Fixierteil 3 zur Befestigung der Halterung 1 an einem Helm (nicht gezeigt). Das Halteteil 2 hat zur Befestigung der Kamera am Halteteil einen Arm 4 mit drei Klemmelementen 5, 6 und 7, zwischen denen zwei Spalten 8 und 9 ausgebildet sind (vergleiche Figur 4).

In die Spalten 8 und 9 sind zwei Tragearme einer Kamera (nicht gezeigt) einschiebbar und mittels einer Spannschraube 10 werden die Spannelemente 5 bis 7 derart aneinander gepresst, dass die in den Spalten 8 und 9 gehaltene Kamera fest mit dem Halteteil 2 verbunden ist.

Das Fixierteil 3 ist als Sockel 11 ausgebildet und dieser Sockel 11 hat eine Klebefläche 12, mit der der Sockel 11 fest mit einem Helm (nicht gezeigt) verbindbar ist.

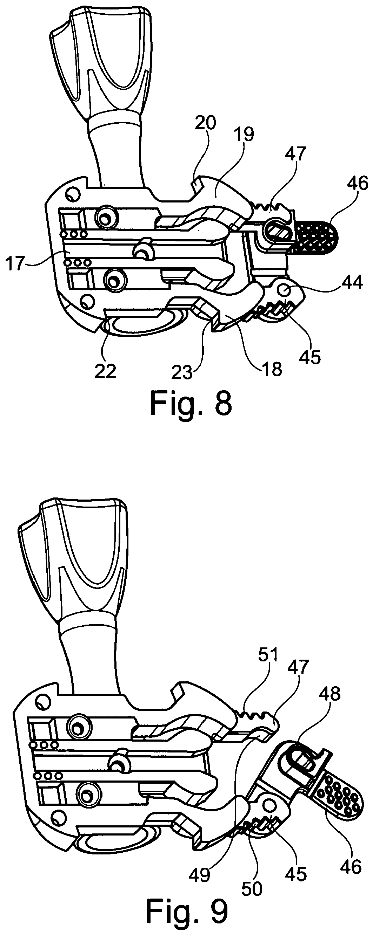

Um den Sockel 11 des Fixierteils 3 mit dem Halteteil 2 sicher zu verbinden, hat der Sockel 11 zwei gegenüberliegende l-förmige Halteleisten 13, 14 und dazwischen eine stabförmige Führungserhebung 15. Hierdurch wird ermöglicht, dass ein Halteteil, wie es in den Figuren 4 und 6 sowie 8 und 9 gezeigt ist, in den Sockel 11 eingeschoben wird und dort sicher gehalten wird. An der Unterseite des Halteteils 16 ist eine Nut 17 vorgesehen, die beim Einschieben des Halteteils 16 in einen Sockel 11 mit der Führungserhebung 15 korrespondiert. Beim Einschieben des Halteteils 16 in einen Sockel 11 werden Klammerarme 18, 19, während sie an den Halteleisten 13, 14 entlanggleiten, zusammengedrückt. Bei vollständig eingeschobenem Halteteil 16 liegen die Halteleisten 13 und 14 am Halteteil 16 zwischen den Begrenzungen 20 bis 23 an, um das Halteteil 16 sicher am Sockel 11 zu halten.

Eine alternative Ausführung eines Fixierteils 24 hat zwei Halteleisten 25, 26 und dazwischen eine Führung 27 und Durchbrüche 28, 29 unterhalb der Halteleisten 25, 26. Jede Halteleiste besteht aus einem senkrechten Halteelement 30 und einem waagerechten Halteelement 31. Im senkrechten Halteelement 30 ist ein Hohlraum 31 vorgesehen. Die Halteleisten 25 und 26 sind über eine Sollbruchstelle 32 oder 33 derart geschwächt, dass entweder das waagerechte Halteelement 31 vom senkrechten Halteelement 30 wegbricht oder das senkrechte Halteelement 30 aus der Grundplatte 34 des Fixierteils 24 herausbricht. Auch die Führung 27 kann wegen der Spalten 35 und 36 zwischen Führung 27 und Grundplatte 34 an den Verbindungsbereichen 37, 38 leicht herausbrechen. Hierzu wird jeweils die Wandstärke der Bruchbereiche auf 0,1 bis 1 mm reduziert.

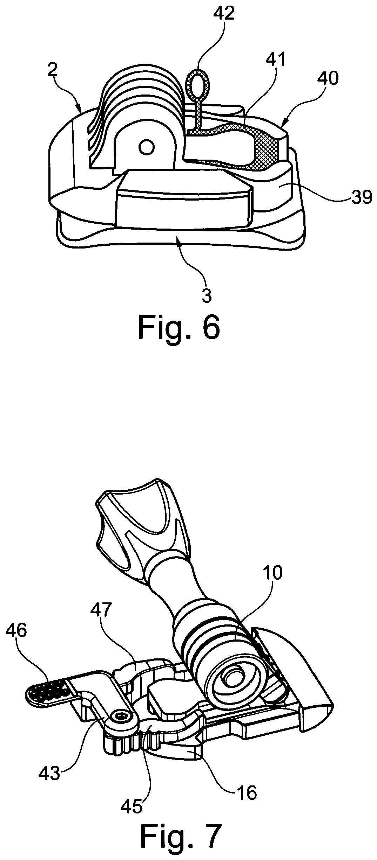

Die Figur 6 zeigt ein Halteteil 2, das durch Einschieben auf das Fixierteil 3 mit diesem fest verbunden ist. Nach dem Einschieben entspannen sich die Klammerarme 39 und 40, so dass in den Hohlraum zwischen den Klammerarmen 39, 40 ein Einsatzelement 41 eingesetzt werden kann. Dadurch wird ein Zusammendrücken der Klammerarme 39 und 40 vermieden. Erst wenn das Einsatzelement 41 mittels des Griffs 42 entfernt wurde, können die Klammerarme 39 und 40 zusammengedrückt werden, um das Halteteil 2 aus den Halteleisten 13 und 14 herauszuschieben, um es vom Fixierteil 3 zu lösen.

Eine alternative Sicherungseinrichtung ist in den Figuren 7 bis 9 gezeigt. Hierbei wird ein Schwenkbügel 43 um eine Drehachse 44 beweglich an einem Klammerarm 45 befestigt.

Dieser Schwenkbügel 43 hat ein Griffstück 46, mit dem er derart zwischen zwei Klammerarmen 45 und 47 eingeschwenkt werden kann, dass eine Rastnase 48 in eine Ausnehmung 49 greift, um den Schwenkbügel 43 zwischen den Klammerarmen 45 und 47 zu fixieren.

Ein rutschsicheres Greifen der Klammerarme zum Zusammendrücken dieser Klammerarme 45 und 47 wird durch eine Strukturierung 50, 51 an der Außenseite der Klammerarme 45 und 47 erreicht.

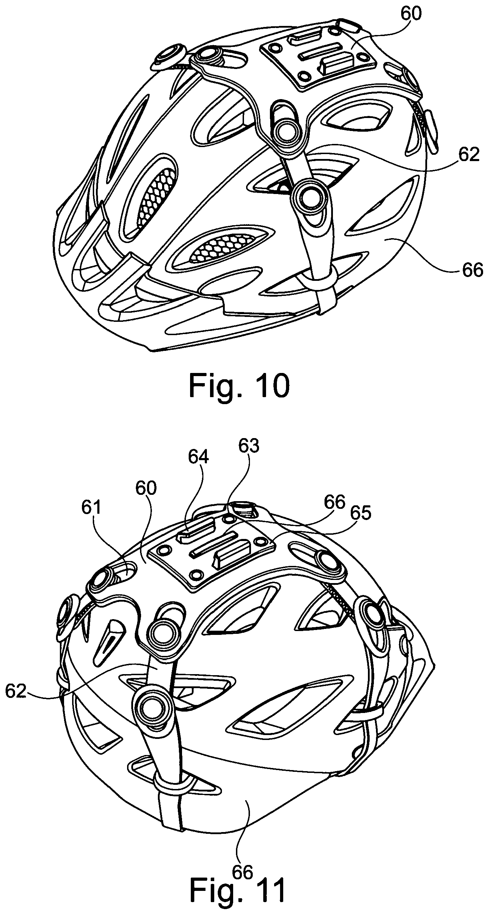

Die Figur 10 zeigt eine Grundplatte 60 mit vier Ösen 61, an denen Verbindungselemente 62 eingehängt sind. Auf der Grundplatte 60 ist ein Halteteil 63 mit Haltebügeln 64 und 65 und dazwischen einer Führungserhebung 66. Das Halteteil 63 ist mit der Grundplatte 60 vernietet und dafür ausgebildet, mit einem Zwischenteil (nicht gezeigt) eine Kamera zu halten. Die Verbindungselemente sind längenverstellbar und leicht elastisch, um die Grundplatte 60, die ebenfalls leicht elastisch ist, am Helm 66 zu befestigen.

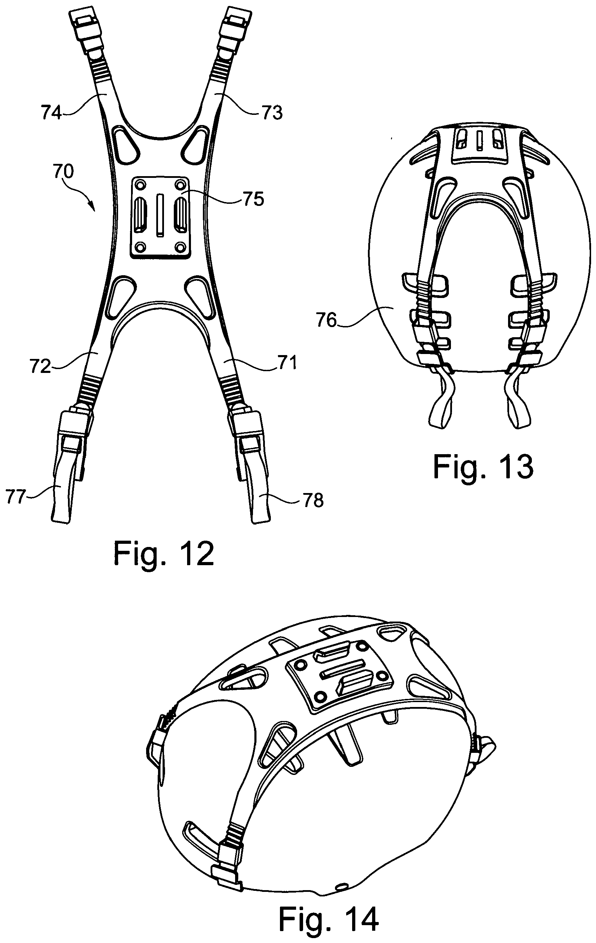

Eine alternative Grundplatte 70 zeigt Figur 12. Sie hat vier einstückig mit der Grundplatte 70 ausgebildete Verbindungselemente 71 bis 74 und auf der Grundplatte 70 ein Halteteil 75, das wie das in Figur 10 gezeigte Halteteil 63 ausgebildet ist. Um die Grundplatte an einem Helm 76 zu befestigen, können zwei Verbindungselemente 73 und 74 an einer Seites des Helms befestigt werden, dann wird die Grundplatte 70 über den Helm 76 gezogen und danach können die zwei anderen Verbindungselemente 71 und 72 mit Haltelaschen 77 und 78 am Helm befestigt werden, so dass die Grundplatte 70 stramm am Helm 76 anliegt.

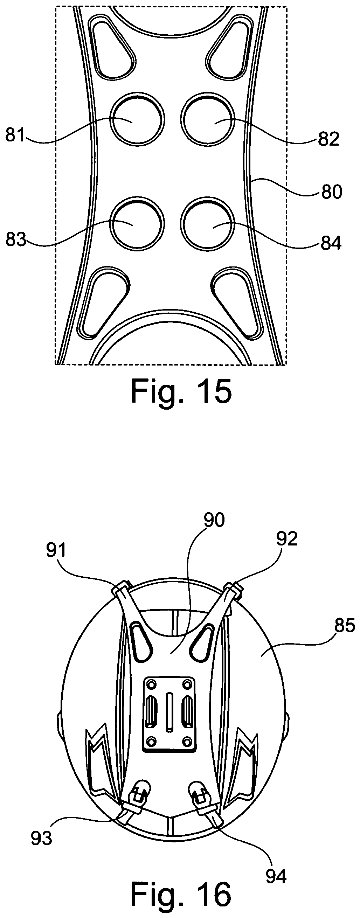

Die Figur 15 zeigt die Unterseite einer Grundplatte 80 mit vier Saugnäpfen 81 bis 84. Diese Saugnäpfe sind etwa unter der Halteplatte angeordnet und dienen dazu, die Grundplatte 80 fest mit der äußeren glatten Helmoberfläche 85 zu verbinden.

Als weiteres Beispiel einer Grundplatte ist in Figur 16 eine Grundplatte 90 mit zwei sich von der Grundpatte erstreckenden mit der Grundplatte einstückig ausgebildeten Verbindungselementen 91 und 92 gezeigt. Zwei angehakte Verbindungselemente 93 und 94 dienen an der anderen Seite als Verbindung der Grundplatte mit dem Helm 85.

## Patentansprüche

1. Helm mit einer Halterung (1) für eine Kamera, wobei die Halterung eine Löseeinrichtung aufweist, die bei Überschreiten einer definierten Belastung auf die Kamera die Kamera an einer definierten Stelle von der Halterung löst, wobei die Halterung ein Halteteil (2) zum Befestigen einer Kamera und ein Fixierteil (3) zur Befestigung der Halterung (1) an dem Helm aufweist, wobei das Halteteil (2) Klammerarme (18, 19) und einen Arm mit drei Klemmelementen (5, 6, 7) aufweist, zwischen denen zwei Spalten (8, 9) ausgebildet sind und die mittels einer Spannschraube (10) aneinander gepresst werden können, und wobei das Fixierteil (3) als Sockel ausgebildet ist, ***dadurch gekennzeichnet, dass*** der Sockel als Haltebügel zwei gegenüber liegende l-förmige Halteleisten (25,26) und dazwischen eine stabförmige Führungserhebung (27) aufweist, sodass das Halteteil (2) in den Sockel eingeschoben werden kann und dort sicher gehalten wird, wobei an der Unterseite des Halteteils (16) eine Nut (17) vorgesehen ist, die beim Einschieben des Halteteils (16) mit der Führungserhebung (27) korrespondiert, sodass beim Einschieben des Halteteils (16) in den Sockel (11) die Klammerarme (18, 19), während sie an den Halteleisten (25,26) entlang gleiten, zusammengedrückt werden, und **dadurch gekennzeichnet, dass** die Halteleisten Sollbruchstellen aufweisen, die bei Überschreiten einer Bruchlast zwischen 10 N und 1000 N auf die Kamera brechen.

2. Helm mit einer Halterung nach Anspruch 1, ***dadurch gekennzeichnet, dass*** das Fixierteil (3, 24) eine Klebefläche (12) aufweist.

3. Helm mit einer Halterung nach einem der vorhergehenden Ansprüche, ***dadurch gekennzeichnet, dass*** das Halteteil (2, 16) in des Fixierteil (3, 24) einrastet.

4. Helm mit einer Halterung nach einem der vorhergehenden Ansprüche, ***dadurch gekennzeichnet, dass*** das Halteteil (2, 16) oder das Fixierteil (3, 24) mit einem Schwenkbügel (43) fixierbar sind.

5. Helm mit einer Halterung nach einem der vorhergehenden Ansprüche, ***dadurch gekennzeichnet, dass*** sie eine Grundplatte aus elastischem Kunststoff mit drei, vorzugsweise vier Verbindungselementen aufweist, die sich von der Grundplatte in unterschiedliche Richtungen erstrecken.

6. Helm mit einer Halterungssystem nach Anspruch 5, ***dadurch gekennzeichnet, dass*** die Verbindungselemente lösbar an der Grundplatte befestigt sind.

7. Helm mit einer Halterungssystem nach einem der Ansprüche 5 oder 6, ***dadurch gekennzeichnet, dass*** die Grundplatte rechteckig oder quadratisch ist und die Verbindungselemente an den Ecken angeordnet sind.

8. Helm mit einer Halterungssystem nach einem der Ansprüche 5 bis 7, ***dadurch gekennzeichnet, dass*** die Verbindungselemente Befestigungseinrichtungen aufweisen, die eine Befestigung unter Spannung an einem Helm ermöglichen.

9. Helm mit einer Halterungssystem nach einem der Ansprüche 5 bis 8, ***dadurch gekennzeichnet, dass*** die Verbindungselemente längenverstellbar sind.

10. Helm mit einer Halterungssystem nach einem der Ansprüche 5 bis 9, ***dadurch gekennzeichnet, dass*** an einer Anlageseite der Grundplatte Saugnäpfe angeordnet sind.

11. Helm mit einer Halterungssystem nach Anspruch 10, ***dadurch gekennzeichnet, dass*** die Saugnäpfe als Rechteck oder Quadrat angeordnet sind.

12. Helm mit einer Halterungssystem nach Anspruch 10 oder 11, ***dadurch gekennzeichnet, dass*** die Saugnäpfe auf der Grundplatte verschiebbar befestigt sind.

13. Helm mit einer Halterungssystem nach einem der Ansprüche 5 bis 12, ***dadurch gekennzeichnet*, *dass*** es an einer Halteseite der Grundplatte eine Rasteinrichtung zur Befestigung von beispielsweise einer Helmkamera aufweist.

14. Anordnung von Kamera mit einer Halterungssystem nach einem der vorhergehenden Ansprüche.

## Claims

1. A helmet having a holder (1) for a camera, wherein the holder has a release device which, when a defined load on the camera is exceeded, releases the camera from the holder at a defined point, wherein the holder has a holding part (2) for fastening a camera and a fixing part (3) for fastening the holder (1) on the helmet, wherein the holding part (2) has bracket arms (18, 19) and an arm with three clamping elements (5, 6, 7), between which two gaps (8, 9) are formed and which can be pressed against one another by means of a tensioning screw (10) and wherein the fixing part (3) is formed as a base, ***characterized in that*** the base as holding clip comprises two opposite l-shaped holding strips (25, 26) and an interposed rod-shaped guide elevation (27) so that the holding part (2) can be inserted into the base and held securely there, wherein a groove (17) is provided in the underside of the holding part (16) which during insertion of the holding part (16) corresponds with the guide elevation (27) so that during insertion of the holding part (16) into the base (11) the bracket arms (18, 19) are pressed together whilst they slide along the holding strips (25, 26) and **characterized in that** the holding strips have predetermined breaking points which break when a breaking load between 10 N and 1000 N on the camera is exceeded.

2. The helmet having a holder according to claim 1, ***characterized in that*** the fixing part (3, 24) has an adhesive surface (12).

3. The helmet having a holder according to one of the preceding claims, ***characterized in that*** the holding part (2, 16) engages in the fixing part (3, 24).

4. The helmet having a holder according to one of the preceding claims, ***characterized in that*** the holding part (2, 16) or the fixing part (3, 24) can be fixed with a swivel bracket (43).

5. The helmet having a holder according to one of the preceding claims, ***characterized in that*** it has a base plate made of elastic plastic with three, preferably four connecting elements which extend from the base plate in different directions.

6. The helmet having a holder according to claim 5, ***characterized in that*** the connecting elements are fastened detachably on the base plate.

7. The helmet having a holder according to one of claims 5 or 6, ***characterized in that*** the base plate is rectangular or square and the connecting elements are arranged at the corners.

8. The helmet having a holder according to one of claims 5 to 7, ***characterized in that*** the connecting elements have fastening devices which enable them to be fastened to a helmet under tension.

9. The helmet having a holder according to one of claims 5 to 8, ***characterized in that*** the connecting elements are length-adjustable.

10. The helmet having a holder according to one of claims 5 to 9, ***characterized in that*** suction cups are arranged on a contact side of the base plate.

11. The helmet having a holder according to claim 10, ***characterized in that*** the suction cups are arranged as a rectangle or square.

12. The helmet having a holder according to claims 10 or 11, ***characterized in that*** the suction cups are fastened displaceably on the base plate.

13. The helmet having a holder according to one of claims 5 to 12, ***characterized in that*** on a holding side of the base plate it has a locking device for fastening, for example a helmet camera.

14. Arrangement of camera having a holding system according to one of the preceding claims.

## Revendications

1. Casque, doté d'un système de retenue (1) pour une caméra, le système de retenue comportant un système de désolidarisation, qui lors du dépassement d'une contrainte définie sur la caméra désolidarise la caméra en un endroit défini du système de retenue, le système de retenue comportant une pièce de maintien (2) destinée à fixer une caméra et une pièce de fixation (3) pour la fixation du système de retenue (1) sur le casque, la pièce de maintien (2) comportant des bras de crampon (18, 19) et un bras avec trois éléments de serrage (5, 6, 7) entre lesquels sont conçues deux fentes (8, 9) et qui au moyen d'une vis de serrage (10) peuvent être pressés l'un contre l'autre, et la pièce de fixation (3) étant conçue sous la forme d'un socle, ***caractérisé en ce qu***'**en** tant qu'étrier de retenue, le socle comporte deux baguettes de retenue (25, 26) en vis-à-vis en forme de L et entre elles une élévation de guidage (27) en forme de tige, de telle sorte que la pièce de maintien (2) puisse être emboîtée dans le socle et y soit maintenue en toute sécurité, sur la face inférieure de la pièce de maintien (16) étant prévue une rainure (17), qui lors de l'emboîtement de la pièce de maintien (16) correspond avec l'élévation de guidage (27) de sorte que lors de l'emboîtement de la pièce de maintien (16) dans le socle (11), pendant qu'ils coulissent le long des baguettes de retenue (25,26), les bras de crampon (18, 19) soient comprimés l'un contre l'autre et **caractérisé en ce que** les baguettes de retenue comportent des zones de rupture théorique, qui lors du dépassement d'une charge de rupture comprise entre 10 N et 1000 N se brisent sur la caméra.

2. Casque, doté d'un système de retenue selon la revendication 1, ***caractérisé en ce que*** la pièce de fixation (3, 24) comporte une surface de collage (12).

3. Casque, doté d'un système de retenue selon l'une quelconque des revendications précédentes, ***caractérisé en ce que*** la pièce de maintien (2, 16) s'enclenche dans la pièce de fixation (3, 24).

4. Casque, doté d'un système de retenue selon l'une quelconque des revendications précédentes, ***caractérisé en ce que*** la pièce de maintien (2, 16) ou la pièce de fixation (3, 24) sont susceptibles d'être fixées à l'aide d'un étrier pivotant (43).

5. Casque, doté d'un système de retenue selon l'une quelconque des revendications précédentes, ***caractérisé en ce qu'***il comporte une plaque d'embase en matière plastique élastique, dotée de trois, de préférence de quatre éléments de liaison, qui à partir de la plaque d'embase s'étendant dans différentes directions.

6. Casque, doté d'un système de retenue selon la revendication 5, ***caractérisé en ce que*** les éléments de liaison sont fixés de manière amovible sur la plaque d'embase

7. Casque, doté d'un système de retenue selon l'une quelconque des revendications 5 ou 6, ***caractérisé en ce que*** la plaque d'embase est rectangulaire ou carrée et les éléments de liaison sont placés dans les angles.

8. Casque, doté d'un système de retenue selon l'une quelconque des revendications 5 à 7, ***caractérisé en ce que*** les éléments de liaison comportent des systèmes de fixation qui permettent une fixation sous tension sur un casque.

9. Casque, doté d'un système de retenue selon l'une quelconque des revendications 5 à 8, ***caractérisé en ce que*** les éléments de liaison sont réglables en hauteur.

10. Casque, doté d'un système de retenue selon l'une quelconque des revendications 5 à 9, ***caractérisé en ce que*** sur une face d'appui de la plaque d'embase sont placées des ventouses.

11. Casque, doté d'un système de retenue selon la revendication 10, ***caractérisé en ce que*** les ventouses sont placées sous la forme de rectangle ou de carré.

12. Casque, doté d'un système de retenue selon la revendication 10 ou 11, ***caractérisé en ce que*** les ventouses sont placées en étant déplaçables sur la plaque d'embase.

13. Casque, doté d'un système de retenue selon l'une quelconque des revendications 5 à 12, ***caractérisé en ce que*** sur une face de maintien de la plaque d'embase, il comporte un système d'enclenchement pour la fixation de par exemple une caméra de casque.

14. Configuration d'une caméra dotée d'un système de retenue selon l'une quelconque des revendications précédentes.
